# EUROPEAN PATENT APPLICATION

(11) **EP 3 539 853 A1**
(43) Date of publication of application: **18.09.2019**
(21) Application number: 19153286.0
(22) Date of filing: 23.01.2019
(51) Int. Cl.: B62D 55/04, B62D 55/27, B62D 55/28, B62D 55/20

(54) **MACHINE TRACK SYSTEM**

(30) Priority: 16.02.2018 FI 20185137
(71) Applicant: Saramoto Oy, 75890 Saramo (FI)
(72) Inventor: Timonen, Jukka, 75890 SARAMO (FI)
(74) Representative: Genip Oy

(57) **Abstract**

The machine track system comprises base chains (2), which comprise fastening parts (22) and link sections (21) that are located between the fastening parts (22) and that connect them, as well as longitudinal track sections or shoes (23) that are fastened to a corresponding fastening part (22) by their both ends (23A, 23B) or that are of the same piece with the fastening part (22), which longitudinal track sections or shoes (23) extend from one base chain (2) to the other base chain (2). Moreover, the machine track system comprises a number of retrofitted track sections or shoes (3). The dimensions and shape of the retrofitted track sections or shoes (3) as well as fastening elements (4, 9) in them enable fastening at their both ends between opposite base chains (2) so that a hook-like fastening element (4) keeps one end (3A) of the track section or shoe (3) fastened to the link section (21), and a pin-like fastening element (9) together with nut fastening (8, 15) installed in a thread (10) keeps the other end (3B) fastened through the corresponding link section (21) in the opposite base chain. Each pin-like fastening element (9) has been fastened by means of a nut (8) to the open side section of the link section (21) from the inside of the machine track system, in other words so that the nut (8) remains inside the link formed by the base chain (2).

## Description

### Field of invention

The invention is related to machine tracks and to tracked work machines equipped with machine tracks, and especially to the adjustment of the ground contacting surface of the machine tracks of forestry machines and tractors.

### Technical background

Forestry machines and tractors with rubber tyres are typically used in forestry. However, the traction of rubber tyres is often not sufficient in cross-country conditions. This is why forestry machines and tractors with rubber tyres are usually equipped with machine tracks.

As an example, Olofsfors AB's Eco-Tracks® (at the time of writing of this text a trade mark registered by Olofsfors AB at least in the EU) machine tracks comprise base chains intended to travel on the side of both sides of rubber tyres, which base chains comprise fastening parts and link sections that are located between the fastening parts and that connect them, and furthermore longitudinal track sections or shoes that are fastened to a corresponding fastening part by their both ends or that are of the same piece with the fastening part, which longitudinal track sections or shoes extend from one base chain to the other base chain. Such machine track is presented in Olofsfors AB's European patent 2 569 212 B1. Said patent is included by way of reference to the description of the present application in terms of one possible structure of the machine track, especially in terms of the more detailed implementation of the structure of the fastening parts, link sections and the support members for the rubber tyre.

In soft sites, especially on peat soil, it is sometimes necessary to use a machine track with a higher carrying capacity. It is purposeful and partly compulsory to use such machine tracks with a better carrying capacity in accordance with the criteria of forest certification (PEFC or FSC) or the required harvesting traces to prevent or minimise rutting. This is the case for example at the sites of the Finnish Metsahallitus.

It is not a financially insignificant investment to purchase several machine tracks equipped with different carrying capacities. On the other hand, changing the machine track easily takes at least one day's work and requires mechanical force due to the relatively high mass of the machine tracks. This is why there are prior art arrangements, where it is possible to temporarily increase the carrying capacity of the machine track by means of retrofitted track sections.

Fomatec Oy's Finnish utility model 11847 describes the fastening of track sections to the base chain of the machine track by means of bolts from each end. For fastening purposes, there is a collar with a slot at both ends of the track sections, and the fastening bolt is installed in the collar.

The same company's YouTube video (https://www.youtube.com/watch?v=UVnDYQRUf-g, time 0:10, viewed on 4 December 2017, on the basis of information available on YouTube, the video became public on 18 October 2017) describes a quick fastening of the track section, where a retrofitted track section is fastened to a track chain by means of a hook from the inner edge of the track chain and by means of a screw from the outer edge using the slot in the collar of the track section.

A machine track, where separately-installable track sections are used in order to increase the ground contacting surface, is known from the Swedish patent publication 408879 of Industrigummering AB.

### Objective of invention

The objective of the invention is to simplify the temporary adding and removal of the ground contacting surface of a machine track.

This objective can be solved by means of a machine track system according to the independent claim 1 and by means of a method according to the parallel independent claim.

### Advantages of invention

The machine track system according to the invention comprises base chains intended to travel on the side of both sides of rubber tyres, which base chains comprise fastening parts and link sections that are located between the fastening parts and that connect them, and which fastening parts contain a protruding support member directed diagonally to the other side for the rubber tyre. Moreover, the machine track system comprises longitudinal track sections or shoes that are fastened to a corresponding fastening part by their both ends or that are of the same piece with the fastening part, which longitudinal track sections or shoes extend from one base chain to the other base chain.

Moreover, the machine track system comprises a number of retrofitted track sections or shoes, which at their one end comprise a hook-like fastening element that protrudes from the track section or shoe at first essentially perpendicularly with respect to the plane of the end of the track section or shoe, and at their other end a pin-like fastening element that protrudes from the track section or shoe essentially perpendicularly with respect to the plane of the end of the track section or shoe,
- where each hook-like fastening element has been dimensioned to fit into a link section when pushed into it, and
- where each pin-like fastening element comprises a thread and is dimensioned to fit for nut fastening taking place to the link section.

Each pin-like fastening element can be fastened most preferably by means of a self-locking (for example by using a plastic-locked nut such as a nylon-locked nut) nut to the open side section of the link section from the inside of the machine track system, in other words so that the nut remains inside the link formed by the base chain.

The dimensions and shape of the retrofitted track sections or shoes as well as fastening elements in them enable fastening at their both ends between opposite base chains so that the hook-like fastening element keeps one end of the track section or shoe fastened to the link section, and the pin-like fastening element together with the nut fastening installed in the thread keeps the other end fastened through the corresponding link section in the opposite base chain. The fastening parts and support members protect the nut from damage for example when driving against rocks.

Such fastening is simpler to implement than for example the fastening of track sections used for pressure equalisation, presented in the Swedish patent application publication 408879, because now it is sufficient that the nut fastening of the pin-like fastening element is implemented to the link section, while in the Swedish solution it is necessary, in the manner presented in FIG 3 of the patent application publication 408879, to use a separate locking plate between the bolt and nut. The nut is also susceptible to damage when driving against rocks.

Such fastening is also simpler to implement than for example the fastening method presented in the above-mentioned Fomatec Oy's YouTube video, because now it is sufficient that the nut fastening of the pin-like fastening element is implemented to the link section, while in Fomatec Oy's solution is it necessary to implement a separate slot in the track section or shoe. The head of the fastening bolt installed in the slot is at the outer edge of the track chain and is therefore susceptible to damage when driving against rocks.

If the nut is damaged in the case of the Swedish solution or if the head of the fastening bolt is damaged in Fomatec Oy's case, it is troublesome to remove the track section.

In the machine track system according to the present invention, the fastening parts and the support members, which protrude diagonally, prevent damage to the fastening nut. The machine track system according to the present invention can hence be considered more robust in accordance with one aspect of the invention.

The hook-like fastening element advantageously comprises an arm section and a hook section, and also at least one shoulder for keeping the track section or shoe at a distance from the fastening part. In this case, the arm section can most preferably be implemented as straight or essentially straight. The shoulder or shoulders are most advantageously located on the side of the track section or shoe opposite to the wear surface. Its or their height is for example 20 - 30 mm, most advantageously essentially approximately 23 mm. In this way, it is not only possible to reduce the folding of the track section or shoe and the track section or shoe can be implemented as wider, but it is also possible to achieve especially the advantage that the track section or shoe becomes adapted by itself in connection with installation to a sufficiently small tolerance. The purpose of the shoulder or shoulders is to keep the installed track section or shoe clear of the fastening part of the track section or shoe of the actual machine track. This enables the locking of the retrofitted track section or shoe to the link section from one end by means of the hook-like fastening element and by means of a bolt from the other end.

The hook-like fastening element is most advantageously suspended to the retrofitted track section or shoe in a form-locked manner or fastened to it by means of a continuous material connection, such as by welding. In this way, it is possible to better prevent the unintentional unfastening of the hook-like fastening element.

The hook-like fastening element most advantageously has a head section that is bigger than the through hole in the track section or shoe. In this case, the suspension or fastening can advantageously be implemented by taking the hook-like fastening element through the through hole in the track section or shoe except for the head section, and alternatively also by welding the head section into contact with the track section or shoe. In this way, it is possible to utilise the size of the head section, which size is bigger than the through hole, and to make the suspension or fastening stronger.

In an operating situation, in the machine track system the hook-like fastening element has been taken through the link section, and the pin-like fastening element has been taken through the link section and after this fastened to the link section by means of nut fastening.

The nut fastening of the pin-like fastening element can most easily be implemented by using a thread manufactured in the pin-like fastening element and a nut suited to this and alternatively also a washer.

The pin-like fastening element has been taken through the through hole in the track section or shoe and suspended by means of a bolt head from that side from which the fastening element has been pushed into the through hole.

The suspension of the pin-like fastening element can be implemented by using a head - most advantageously a bolt head - that is bigger than the through hole. A bigger head is most advantageously a fixed part of the pin-like fastening element.

The pin-like fastening element can be fastened to the track section or shoe by means of welding from the opposite side, most advantageously by welding the head into contact with the track section or shoe.

In an operating situation, the machine track system is installed into place over at least two rubber tyres on the same side so that each rubber tyre on the same side is between opposite base chains.

A washer supported against the side sections of the link section is used in connection with the nut. The track section is locked not only by means of the nut and washer but also by means of a counterpart welded or for example cast on the surface opposite to the track section. The retrofitted track sections or shoes have most advantageously been implemented as a steel casting and furthermore so that a steel casting is used to implement not only the shape and profile of the track section or shoe but also the hook-like fastening element, which has a shoulder on the side opposite to the wear surface of the track section or shoe in order to keep the track section or shoe at a distance from the fastening part. According to our estimate, the solution described in Fomatek Oy's utility model is more troublesome, if not impossible to implement as a steel casting.

In the method for the temporary increase in the ground contacting surface of a machine track of a forestry machine or tractor, a number of retrofitted track sections or shoes are installed to a machine track system according to the invention.

The machine track system and method according to the invention are suited to so-called traction-generating track models generally available in the market, with very small or hardly any necessary adaptation changes. As an example, the solution described in utility model 11847 only works with said chain track model.

Swedish published patent application 408 879 presents a chain track equipped with side chains. Such track shoe is intended to prevent damage to asphalt surfaces and generally to any road surfaces. The solution does not increase the carrying capacity in practice, because track shoes must be installed to fill all link spaces so that the chain track would stay on the tyres and would endure use. In the machine track system and method according to the present invention, it is possible to install for example only half of the retrofitted track sections or shoes.

### List of drawings

In what follows, we present the machine track system and method in accordance with the example embodiment presented in the enclosed drawings. Of the drawings:
- FIG 1: shows a rubber tyre over which there is a prior art machine track;
- FIG 2: shows the rubber tyre of FIG 1, where a hook-like fastening element of a retrofitted track
- FIG 3: section or shoe is being pushed into the link section of the rubber tyre; shows the situation of FIG 2 after the hook-like fastening element has been put into place, viewed from a different direction;
- FIG 4: shows the situation of FIG 3 viewed from the same direction as in FIG 1;
- FIG 5: shows the situation further down of FIG 4, illustrating the fastening of the pin-like fastening element to the link section; and
- FIG 6: shows the embodiment of the track section or shoe with shoulder viewed from the side.

The same reference numbers are used in all drawings of structural parts that correspond to each other.

### Detailed description of the invention

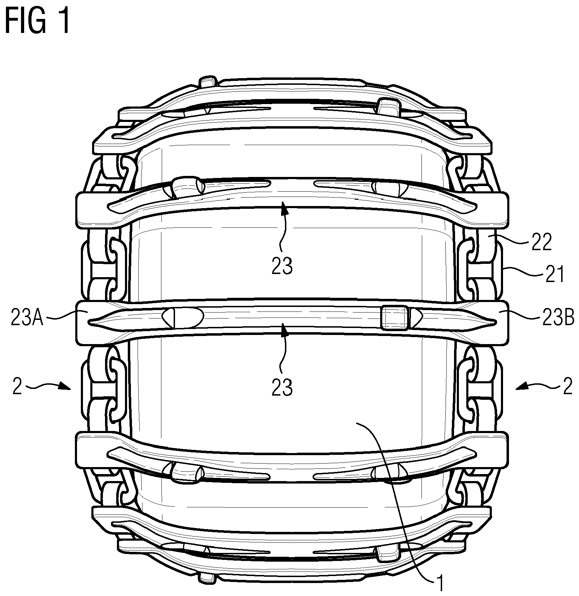

FIG 1 shows a rubber tyre 1 over which there is a prior art machine track. Rubber tyre 1 refers to an air-filled or liquid-filled rubber tyre typically used for example in forestry machines and tractors.

The machine track contains a base chain 2 on both sides of the rubber tyre 1, intended to travel on the side of both sides of the rubber tyres 1. The base chain 2 comprises fastening parts 22 and link sections 21 that are located between the fastening parts 22 and that connect them. The fastening parts 22 contain a protruding support member 24 directed diagonally to the other side for the rubber tyre 1.

Moreover, the machine track comprises longitudinal track sections or shoes 23 that are fastened to a corresponding fastening part 22 by their both ends 23A, 23B or that are of the same piece with the fastening part 22, which longitudinal track sections or shoes 23 extend from one base chain 2 to the other base chain 2.

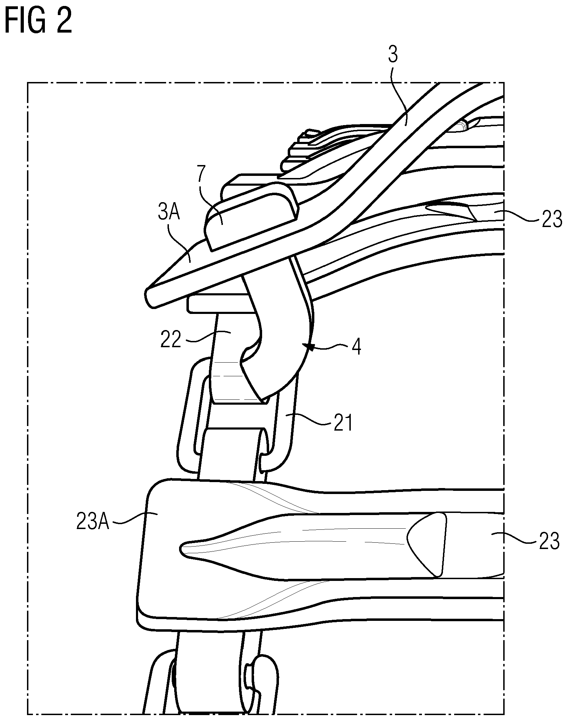

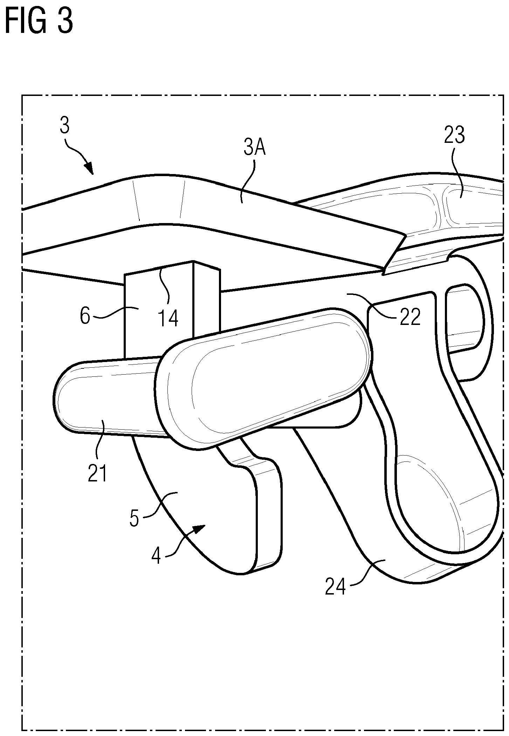

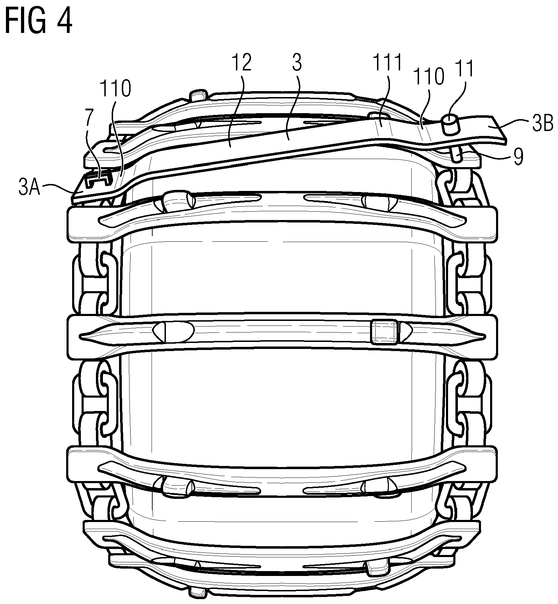

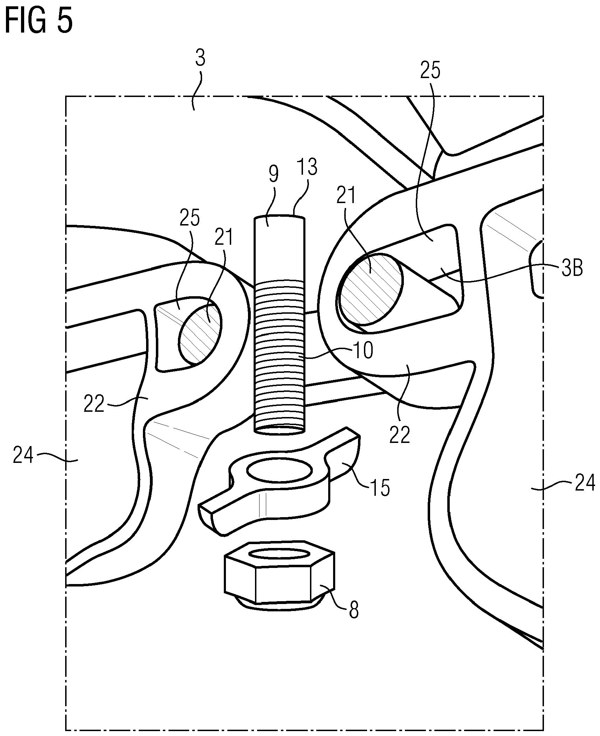

The machine track system according to the invention also comprises (cf. FIG 4) a number of retrofitted track sections or shoes 3, which at their one end 3A comprise a hook-like fastening element 4 (cf. FIG 2 and 3) that protrudes from the track section or shoe 3 at first essentially perpendicularly with respect to the plane of the end 3A of the track section or shoe 3, and at their other end a pin-like fastening element 9 (cf. FIG 5) that protrudes from the track section or shoe 3 essentially perpendicularly with respect to the plane of the end 3B of the track section or shoe 3.

Each hook-like fastening element 4 has been dimensioned to fit into a link section 21 when pushed into it. Each pin-like fastening element 9 comprises a thread 10 and is dimensioned to fit for nut fastening (nut 8, washer 15) taking place to the link section 21.

The dimensions and shape of the retrofitted track sections or shoes 3 as well as of the fastening elements (hook-like fastening element 4 and pin-like fastening element 9) in them enable fastening at their both ends between opposite base chains 2 so that the hook-like fastening element 4 keeps one end 3A of the track section or shoe 3 fastened to the link section 21, and the pin-like fastening element 9 together with the nut fastening installed in the thread 10 keeps the other end 3B fastened through the corresponding link section 21 in the opposite base chain.

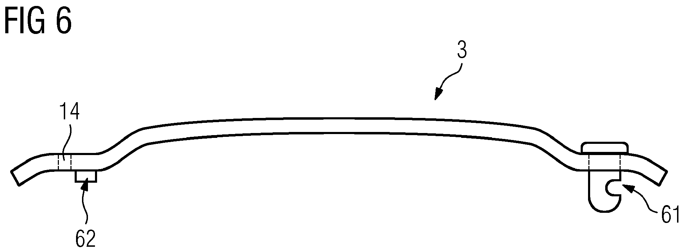

FIG 2 shows a machine track, where a hook-like fastening element 4 of a retrofitted track section or shoe 3 is being pushed into a link section 21 of the machine track. As FIG 2 shows, the hook-like fastening element 4 comprises an arm section 6 and a hook section 5 as well as most advantageously also at least one shoulder 61, 62 (cf. FIG 6) in order to keep the track section or shoe 3 at a distance from the fastening part 22 of the track section or shoe 23 of the actual machine track.

The hook-like fastening element 4 can be suspended to the retrofitted track section or shoe 3 in a form-locked manner or fastened to it by means of a continuous material connection, such as by welding.

The hook-like fastening element 4 most advantageously has a head section 7 that is bigger than the through hole 14 in the track section or shoe (the diameter of the through hole 14 is most advantageously 18 - 22 mm, at best essentially approximately 22 mm). The suspension or fastening has been implemented by taking the hook-like fastening element 4 through the through hole 14 in the track section or shoe 3 except for the head section 7, and alternatively also by welding the head section 7 into contact with the track section or shoe 3.

In the situation of FIG 5, the hook-like fastening element 4 has been taken through the link section 21 (as explained in connection with FIG 2 and 3), and the pin-like fastening element 9 has been taken through the link section 21 and after this fastened to the link section 21 by means of nut fastening (screw 8, washer 15).

The nut fastening of the pin-like fastening element 9 has best been implemented by using a thread 10 manufactured in the pin-like fastening element 9 and a nut 8 suited to the thread, and alternatively also a washer 15.

The pin-like fastening element 9 can be taken through the through hole 13 in the track section or shoe 3 and suspended to the track section or shoe 3 from the opposite side of the through hole 13.

The suspension of the pin-like fastening element 9 can be implemented by using a head 11 - most advantageously a bolt head - that is bigger than the through hole 13, which head 11 is most advantageously a fixed part of the fastening element 9.

The pin-like fastening element 9 can be fastened to the track section or shoe 3 by means of welding from the opposite side, most advantageously by welding the head 11 into contact with the track section or shoe 3.

In an operating situation, the machine track system is installed into place over at least two rubber tyres 1 on the same side so that each rubber tyre 1 on the same side is between opposite base chains 2.

Each pin-like fastening element 9 has been fastened by means of a nut 8 to the link section 21 from the inside of the machine track system, in other words so that the nut 8 remains inside the link formed by the base chain 2. A washer 15 supported against the side sections of the link section 21 is used in connection with the nut 8, in which case the track section is locked not only by means of the nut 8 and washer 15 but also by means of a counterpart 11 welded or cast on the surface opposite to the track section or shoe 3.

In the method for the temporary increase in the ground contacting surface of a machine track of a forestry machine or tractor, a number of retrofitted track sections or shoes 3 are installed to a machine track system according to the invention.

The track section or shoe 3 is most advantageously implemented as a steel casting. In this case, the steel casting forms the shape and profile of the track section or shoe 3 as well as the hook-like fastening element 4 plus the shoulder 61 and the through hole 14. The steel casting is also an especially advantageous method of implementing the prevention of rotation of the fastening bolt on the edge of the through hole 14 on the side of the wear surface of the track section or shoe, as well as the shoulder 62.

The invention should not be understood to be limited only by the below claims, but the invention is to be understood to include all their legal equivalents and the combinations of the embodiments presented.

### List of reference numbers used:

- 1: rubber tyre
- 2: base chain
- 21: link section
- 22: fastening part
- 23: track section or shoe
- 23A, 23B: ends of track section or shoe
- 24: support member
- 3: retrofitted track section or shoe
- 3A, 3B: ends of track section or shoe
- 4: hook-like fastening element
- 5: hook section
- 6: arm
- 7: head section
- 8: nut
- 9: pin-like fastening element
- 10: screw thread
- 11: head
- 13: through hole
- 14: through hole
- 15: washer
- 61: shoulder
- 62: shoulder
- 110, 111: folding

## Claims

**1.** A machine track system, which comprises:
- base chains (2) intended to travel on the side of both sides of rubber tyres (1), which base chains (2) comprise fastening parts (22) and link sections (21) that are located between the fastening parts (22) and that connect them, and which fastening parts (22) contain a protruding support member (24) directed diagonally to the other side for the rubber tyre (1);
- longitudinal track sections or shoes (23) that are fastened to a corresponding fastening part (22) by their both ends (23A, 23B) or that are of the same piece with the fastening part (22), which longitudinal track sections or shoes (23) extend from one base chain (2) to the other base chain (2);
and which is **characterised in that:**
i) The machine track system further comprises:
- a number of retrofitted track sections or shoes (3), which at their one end comprise a hook-like fastening element (4) that protrudes from the track section or shoe (3) at first essentially perpendicularly with respect to the plane of the end (3A) of the track section or shoe (3), and at their other end a pin-like fastening element (9) that protrudes from the track section or shoe (3) essentially perpendicularly with respect to the plane of the end (3B) of the track section or shoe (3),
- where each hook-like fastening element (4) has been dimensioned to fit into a link section (21) when pushed into it, and
- where each pin-like fastening element (9) comprises a thread (10) and is dimensioned to fit for nut fastening (8, 15) taking place to the link section (21).
- Where the dimensions and shape of the retrofitted track sections or shoes (3) as well as fastening elements (4, 9) in them enable fastening at their both ends between opposite base chains (2) so that the hook-like fastening element (4) keeps one end (3A) of the track section or shoe (3) fastened to the link section (21), and the pin-like fastening element (9) together with the nut fastening (8, 15) installed in the thread (10) keeps the other end (3B) fastened through the corresponding link section (21) in the opposite base chain.
ii) Each pin-like fastening element (9) has been fastened by means of a nut (8) to the open side section of the link section (21) from the inside of the machine track system, in other words so that the nut (8) remains inside the link formed by the base chain (2).

**2.** A machine track system according to claim 1, **where:** the hook-like fastening element (4) comprises an arm section (6) and a hook section (5), and also at least one shoulder (61, 62) for keeping the track section or shoe (3) at a distance from the fastening part (22).

**3.** A machine track system according to claim 1 or 2, **where:** the hook-like fastening element (4) has been suspended to the retrofitted track section or shoe (3) in a form-locked manner or fastened to it by means of a continuous material connection, such as by welding.

**4.** A machine track system according to claim 3, **where:** the hook-like fastening element (4) has a head section (7) that is bigger than the through hole (14) in the track section or shoe, and where the suspension or fastening has been implemented by taking the hook-like fastening element (4) through the through hole (14) in the track section or shoe (3) except for the head section (7), and alternatively also by welding the head section (7) into contact with the track section or shoe (3).

**5.** A machine track system according to any one of the claims 1 - 4, **where:** i) the hook-like fastening element (4) has been taken through the link section (21) and ii) the pin-like fastening element (9) has been taken through the link section (21) and after this fastened to the link section (21) by means of nut fastening (8, 15).

**6.** A machine track system according to any one of the preceding claims, **where:** the nut fastening (8, 15) of the pin-like fastening element (9) has been implemented by using a thread (10) manufactured in the pin-like fastening element (9) and a nut (8) suited to the thread, and alternatively also a washer (15) .

**7.** A machine track system according to any one of the claims 1 - 6, where the pin-like fastening element (9) has been taken through the through hole (13) in the track section or shoe (3) and suspended by means of a bolt head (11) from that side from which the fastening element (9) has been pushed into the through hole (13).

**8.** A machine track system according to claim 7, where the suspension of the pin-like fastening element (9) has been implemented by using a head (11) - most advantageously a bolt head - that is bigger than the through hole (13), which head (11) is most advantageously a fixed part of the pin-like fastening element (9).

**9.** A machine track system according to claim 7 or 8, where the pin-like fastening element (9) has been fastened to the track section or shoe (3) by means of welding from the opposite side, most advantageously by welding the head (11) into contact with the track section or shoe (3).

**10.** A machine track system according to any one of the preceding claims, where a washer (15) supported against the side sections of the link section (21) is used in connection with the nut (8), in which case the track section is locked not only by means of the nut (8) and washer (15) but also by means of a counterpart (11) welded or cast on the surface opposite to the track section or shoe (3).

**10.** A machine track system according to any one of the preceding claims, **which:** is installed into place over at least two rubber tyres (1) on the same side so that each rubber tyre (1) on the same side is between opposite base chains (2).

**11.** A machine track system according to claim 10, **where:** a washer (15) supported against the side sections of the link section (21) is used in connection with the nut (8), in which case the track section is locked not only by means of the nut (8) and washer (15) but also by means of a counterpart (11) welded or cast on the surface opposite to the track section or shoe (3).

**12.** A machine track system according to any one of the preceding claims, **where:** the retrofitted track sections or shoes (3) have been implemented as a steel casting, in which case a steel casting has been used to implement not only the shape and profile of the track section or shoe (3) but also the hook-like fastening element (4), which has a shoulder (61) on the side opposite to the wear surface of the track section or shoe (3) in order to keep the track section or shoe (3) at a distance from the fastening part (22).

**13.** A method for the temporary increase in the ground contacting surface of a machine track of a forestry machine or tractor, **characterised in that:** in the method a number of retrofitted track sections or shoes (3) are installed to a machine track system according to any one of the preceding claims.
